# FASCICULE DE BREVET EUROPEEN

(11) **EP 4 168 659 B1**
(45) Date de publication et mention de la délivrance du brevet: **13.11.2024**
(21) Numéro de dépôt: 21737730.8
(22) Date de dépôt: 15.06.2021
(51) Int. Cl.: F02C 3/10, F01D 9/02, F02C 7/08, F04D 29/42

(54) **TURBOMACHINE D'AERONEF A CYCLE RECUPERE**
FLUGZEUGTURBOMASCHINE MIT WIEDERGEWONNENEM ZYKLUS
RECOVERED-CYCLE AIRCRAFT TURBOMACHINE

(30) Priorité: 17.06.2020 FR 2006310
(43) Date de publication de la demande: 26.04.2023
(73) Titulaire: Safran Helicopter Engines, 64510 Bordes (FR)
(72) Inventeur: PONS, Bernard Claude, 77550 MOISSY-CRAMAYEL (FR); PUERTO, Alphonse, 77550 MOISSY-CRAMAYEL (FR); TARNOWSKI, Laurent Pierre, 77550 MOISSY-CRAMAYEL (FR); VIVE, Loïs Pierre Denis, 77550 MOISSY-CRAMAYEL (FR)
(74) Mandataire: Gevers & Orès
(86) Numéro de dépôt international: PCT/FR2021/051076
(87) Numéro de publication internationale: WO 2021/255384

(56) Documents cités:
- EP-A2- 2 799 666
- FR-A- 1 003 131
- GB-A- 2 250 780
- US-A- 2 946 192

## Description

### Domaine technique de l'invention

La présente invention concerne une turbomachine d'aéronef équipée de volutes pour la mise en oeuvre d'un cycle récupéré.

### Arrière-plan technique

Une turbomachine d'aéronef comprend un générateur de gaz comportant d'amont en aval, dans le sens d'écoulement des gaz, au moins un compresseur, une chambre annulaire de combustion, et au moins une turbine. Le compresseur est alimenté en air et le comprime. L'air comprimé est mélangé à du carburant et brûlé dans la chambre de combustion qui fournit des gaz de combustion à la turbine. Ces gaz de combustion se détendent dans la turbine et entraînent en rotation son rotor, qui entraîne à son tour, par l'intermédiaire d'un arbre commun, le rotor du compresseur.

Une turbomachine peut être équipée d'un ou plusieurs corps comportant chacun un rotor de compresseur relié par un arbre à un rotor de turbine.

Il existe également des turbomachines où une turbine libre est montée en aval du ou des corps de la turbomachine. Une turbine est libre dans la mesure où son rotor n'est pas relié par un arbre à un rotor de compresseur.

On comprend ainsi qu'une turbomachine peut comprendre plusieurs compresseurs successifs (par exemple un compresseur basse pression suivi d'un compresseur haute pression), ainsi que plusieurs turbines successives (par exemple une turbine haute pression suivie d'une turbine libre ou d'une turbine basse pression).

Dans la présente demande, on entend par une turbomachine à cycle classique, une turbomachine dont l'air comprimé sortant du ou des compresseurs alimentent directement la chambre de combustion.

A contrario, on entend par une turbomachine à cycle récupéré, une turbomachine dans laquelle les gaz de combustion s'écoulant en sortie de la ou des turbines sont utilisés pour réchauffer l'air comprimé sortant du ou des compresseurs et destiné à alimenter la chambre de combustion. Cette technologie permet d'améliorer les performances de la turbomachine car la quantité de carburant nécessaire pour atteindre la température de fonctionnement de la turbomachine est inférieure à celle nécessaire dans le cadre d'une turbomachine à cycle classique.

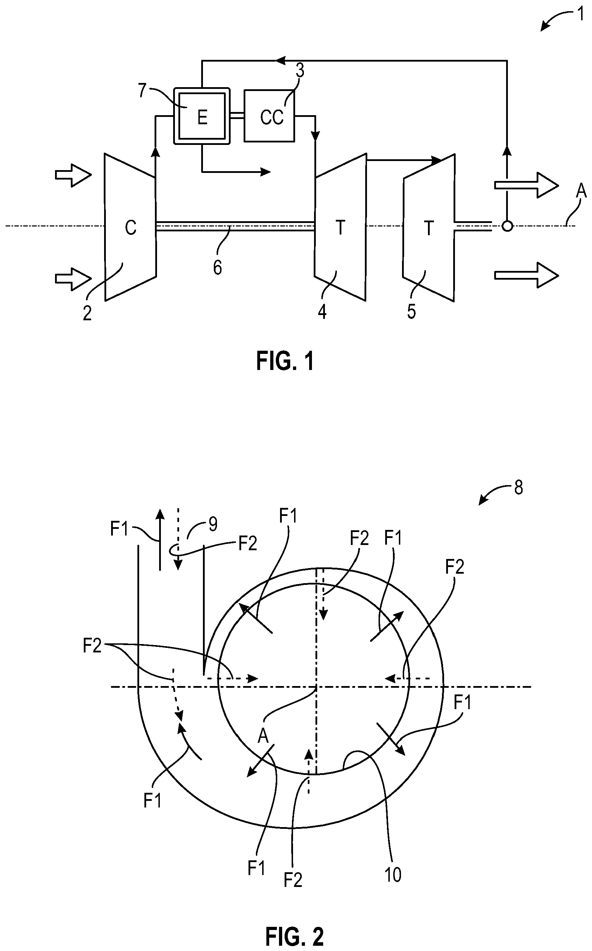

La figure 1 représente de manière très schématique une turbomachine à cycle récupéré.

La turbomachine 1 comprend d'amont en aval un compresseur 2, une chambre annulaire de combustion 3, une turbine 4 et une turbine libre 5. Les rotors du compresseur 3 et de la turbine 4 sont reliés ensemble par un arbre 6 et forment un même corps.

La turbomachine 1 comprend un échangeur de chaleur 7 dont un premier circuit est alimenté par des gaz de combustion prélevés en sortie de la turbine libre 5. L'échangeur 7 comprend un second circuit qui est alimenté en air comprimé sortant du compresseur 2 et qui fournit de l'air comprimé réchauffé à la chambre de combustion 3.

L'intégration de cette technologie peut être rendue complexe lorsque le compresseur 2 est du type centrifuge. Un compresseur centrifuge est un compresseur qui a une entrée orientée parallèlement à l'axe longitudinal de la turbomachine, et une sortie qui est orientée radialement par rapport à cet axe. Ce type de compresseur est associé à un système de diffusion et de redressement du flux d'air comprimé. Ce système comprend un ensemble diffuseur-redresseur et comporte donc un diffuseur annulaire qui est orienté sensiblement radialement et qui est aligné avec la sortie du compresseur centrifuge, et un redresseur annulaire qui est orienté sensiblement axialement pour orienter le flux d'air comprimé vers la chambre de combustion.

Une solution d'intégration pour cette technologie a déjà été proposée dans le passé et consiste à utiliser un ensemble de deux volutes.

Comme représenté à la figure 2, une volute 8 est un conduit enroulé en spirale autour d'un axe et dont la section de passage de fluide évolue. Dans le cadre de la présente demande, une volute comprend un conduit annulaire enroulé en spirale autour de l'axe longitudinal A de la turbomachine et relié à un premier port 9 situé à la périphérie externe du conduit et orienté en direction tangentielle, et un second port 10 situé à la périphérie interne du conduit et orienté en direction radiale.

La section de passage est maximale au niveau du premier port 9 de chaque volute et minimale au niveau de l'extrémité circonférentielle du conduit opposée au premier port 10.

Une première volute a son second port 10 qui est raccordé à la sortie du diffuseur et son premier port 9 qui alimente l'entrée du second circuit de l'échangeur (flèches F1 en traits continus). La sortie de ce second circuit est reliée au premier port 9 de la seconde volute dont le second port 10 est raccordé à l'entrée du redresseur (flèches F2 en traits discontinus).

La solution proposée consiste d'abord à imbriquer les volutes l'une dans l'autre, depuis leurs premiers ports qui sont jumelés, jusqu'aux extrémités circonférentielles de plus petite section des conduits. La solution consiste en outre à rapprocher le plus possible les volutes du compresseur centrifuge et de la chambre de combustion.

Cependant, cette solution présente de nombreux inconvénients.

Tout d'abord, bien que le fait de rapprocher les volutes l'une de l'autre, voire de les accoler l'une à l'autre, est avantageux d'un point de vue de l'encombrement, ceci est très pénalisant en particulier d'un point de vue énergétique et performance lorsque les volutes sont imbriquées l'une dans l'autre. En effet, plus les volutes sont imbriquées l'une dans l'autre et plus le risque d'échange thermique entre les flux circulants dans les conduits des deux volutes est important. L'air comprimé qui est réchauffé par l'échangeur et qui circule dans la seconde volute, est alors refroidi par l'air comprimé plus froid destiné à alimenter cet échangeur et qui circule dans la première volute. Le fait de jumeler les premiers ports accentuent ce phénomène puisque l'extrémité circonférentielle la plus chaude de la première volute est située au niveau de l'extrémité circonférentielle la plus froide de la seconde volute.

Par ailleurs, la solution proposée engendre des modifications importantes de la turbomachine et donc des coûts relativement importants. Une reconception complète de la chambre de combustion est par exemple nécessaire. C'est également le cas du redresseur qui doit être reconfiguré pour maîtriser avec précision la vitesse (et en particulier le Mach) et la giration du flux d'air alimentant la chambre de combustion.

L'art antérieur comprend également les documents GB-A-2250780, US-A-2946192, EP-A2-2799666 et FR-A-1003131.

La présente invention propose une solution simple, efficace et économique à au moins une partie de ces problèmes.

### Résumé de l'invention

L'invention concerne une turbomachine d'aéronef, comportant :
- un compresseur centrifuge s'étendant autour d'un axe A,
- une chambre annulaire de combustion s'étendant autour de l'axe A,
- un carter annulaire s'étendant autour de l'axe A et de la chambre et délimitant un espace annulaire dans laquelle est située la chambre, et
- un échangeur de chaleur, cet échangeur comportant :
- un premier circuit alimenté en gaz d'échappement de la turbomachine, et
- un second circuit comportant une entrée reliée par une première volute à une sortie du compresseur, et une sortie reliée par une seconde volute audit espace,
caractérisée en ce que les volutes sont à distance axiale l'une de l'autre, et en ce que la seconde volute est reliée à l'espace par un redresseur qui est situé au moins en partie à l'extérieur du carter et qui est intégré dans une conduite annulaire de liaison de la seconde volute à ce carter.

Les volutes sont ainsi agencées pour limiter les échanges thermiques entre les fluides circulant dans leurs conduits. Par ailleurs, le redresseur est spécifiquement conçu pour optimiser l'alimentation en air de la chambre, ce qui est très avantageux par rapport à la technique antérieure. Le fait que ce redresseur soit situé à l'extérieur du carter offre une multitude de possibilités dans les choix des paramètres de ce redresseur, parmi son orientation, sa longueur, sa dimension radiale, et en outre les positions et dimensions de ses aubages.

Avantageusement, la turbomachine est un turbomoteur, le turbomoteur étant par exemple destiné à entrainer la voilure tournante d'un hélicoptère.

La turbomachine selon l'invention peut comprendre une ou plusieurs des étapes ou caractéristiques suivantes, considérées indépendamment les unes des autres ou en combinaison les unes avec les autres :
- les volutes ont chacune une section de passage de forme circulaire ou ovale ;
- le redresseur et la seconde volute, voire également au moins une partie dudit carter, sont formés d'une seule pièce ; en variante, ils pourraient être formés par assemblage de plusieurs pièces ;
- ledit redresseur comprend des aubages qui sont configurés pour que le flux d'air alimentant ledit espace ait une giration et un Mach prédéterminés ;
- ledit redresseur comprend deux parois annulaires coaxiales et s'étendant parallèlement l'une par rapport à l'autre, ces parois étant reliées entre elles par lesdits aubages qui comportent chacun un profil aérodynamique
- la chambre de combustion est du type inversé et comprend un fond de chambre à son extrémité aval, la seconde volute étant située en aval d'un plan perpendiculaire à l'axe et passant par le fond de chambre ;
- le redresseur est incliné d'un angle α compris entre 0 et 90° par rapport à un plan perpendiculaire à l'axe, cet angle étant mesuré dans un plan passant par cet axe ;
- la seconde volute a un diamètre interne supérieur ou égal au diamètre externe dudit carter ;
- la première volute a un diamètre interne inférieur au diamètre externe du carter ;
- les premières et secondes volutes comprennent des bossages à trous taraudés et/ou des brides de fixation, qui sont formés d'une seule pièce avec le reste de ces volutes ; en variante, ils pourraient être formés par assemblage de plusieurs pièces ; ces pièces peuvent être formées par fabrication additive par exemple.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] la figure 1 est une vue très schématique d'une turbomachine d'aéronef à cycle récupéré ;
[Fig.2] la figure 2 est une vue très schématique d'une volute ;
[Fig.3] la figure 3 est une vue schématique partielle en coupe axiale d'une turbomachine d'aéronef à cycle récupéré, selon un premier mode de réalisation de l'invention ; et
[Fig.4] la figure 4 est une vue similaire à celle de la figure 3 et représentant un second mode de réalisation de l'invention.

### Description détaillée de l'invention

Les figures 1 et 2 ont déjà été décrites dans ce qui précède.

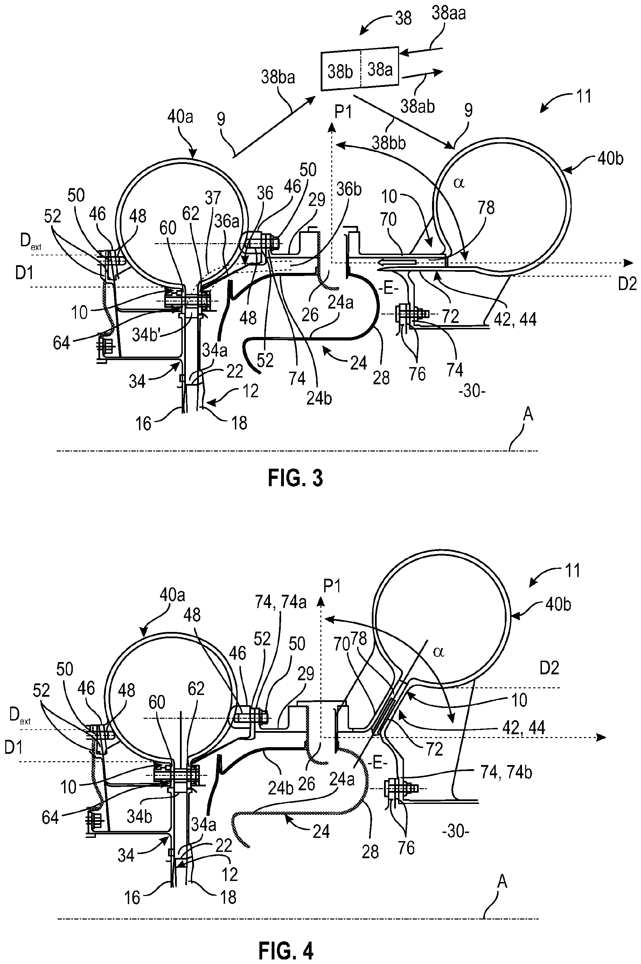

Les figures 3 et 4 illustrent des modes de réalisation préférés d'une turbomachine 11 d'aéronef.

La turbomachine 11 est partiellement représentée aux figures 3 et 4 et comprend de manière classique au moins un compresseur, une chambre annulaire de combustion et au moins une turbine.

Dans l'exemple représenté, la turbomachine 11 comprend un compresseur 12 du type centrifuge, qui est partiellement représenté.

Le compresseur 12 a une forme annulaire autour d'un axe A qui est l'axe longitudinal de la turbomachine 11. Le compresseur 12 comprend un stator 16 et un rotor aubagé 18, appelé rouet, qui tourne à l'intérieur du stator 16 et autour de l'axe A.

Le compresseur 12 comprend une entrée (non visible) orientée axialement vers l'amont et une sortie 22 orientée radialement vers l'extérieur vis-à-vis de l'axe A. Les expressions amont et aval font ici référence à l'écoulement général de l'air et des gaz dans la turbomachine 11.

La turbomachine 11 comprend en outre une chambre de combustion 24 qui est située en aval du compresseur 12.

La chambre de combustion 24 comprend deux parois annulaires, respectivement interne 24a, et externe 24b, qui définissent entre elles une cavité annulaire dans laquelle sont injectés et mélangés de l'air comprimé provenant du compresseur 12 et du carburant provenant d'injecteurs 26.

Les parois 24a, 24b sont reliées entre elles par un fond de chambre 28 qui a une forme annulaire et qui comprend des orifices (non visibles) de passage de l'air comprimé provenant du compresseur 12 pour l'alimentation de la chambre 24.

La chambre de combustion 24 est entourée par un carter annulaire externe 29 qui porte notamment les injecteurs 26. Ce carter 29 définit un espace annulaire E dans lequel est logée la chambre 24.

Dans l'exemple représenté, la chambre 24 est du type inversé car son fond de chambre 28 est situé du côté aval de cette chambre. La sortie de la chambre 24 est située du côté amont de la chambre et est raccordée à une ou plusieurs turbines 30 disposées en aval de la chambre.

Les gaz de combustion injectés dans la turbine 30 se détendent et entraînent son rotor qui est relié par un arbre au rotor 18 du compresseur 12 en vue de leur entraînement en rotation autour de l'axe A.

Les gaz de combustion sont ensuite évacués dans une tuyère d'échappement des gaz de combustion qui n'est pas représentée.

Dans une turbomachine à cycle classique, qui comprend de nombreux éléments identiques ou similaires à ceux d'une turbomachine 11 d'aéronef à cycle récupéré telle que représentée sur la figure 3, le raccordement de la sortie du compresseur 12 à la chambre de combustion 24 est réalisé par un système de diffusion et de redressement d'air, aussi appelé diffuseur-redresseur.

Ce diffuseur-redresseur comporte :
- un diffuseur annulaire 34 qui est orienté sensiblement radialement et qui comprend à sa périphérie interne une entrée 34a alimentée par le compresseur 12 et alignée radialement avec la sortie 22 de ce dernier, et une sortie 34b à sa périphérie externe qui débouche radialement vers l'extérieur ; et
- un redresseur annulaire 36 (représenté en traits pointillés sur la figure 3 pour illustrer que cette disposition est présente uniquement dans une turbomachine à cycle classique) qui est orienté sensiblement axialement et qui comprend à son extrémité amont une entrée 36a, et à son extrémité aval une sortie 36b pour alimenter l'espace E et la chambre de combustion 24.

Le diffuseur 34 est situé en amont de la chambre 24 et de ses parois 24a, 24b et le redresseur 36 s'étend autour de la chambre 24 et de ses parois 24a, 24b et à l'intérieur du carter 29. Le diffuseur 34 est fixé par bridage au stator 16 du compresseur 12. Le redresseur 36 peut être fixé par bridage au carter 29.

Le diffuseur 34 et le redresseur 36 sont en général aubagés.

Dans une turbomachine à cycle classique, la sortie 34b du diffuseur 34 est directement raccordée, par exemple par un conduit 37 coudé en L (représenté en traits pointillés sur la figure 3 pour illustrer que cette disposition est présente uniquement dans une turbomachine à cycle classique) à l'entrée 36a du redresseur 36. Autrement dit, l'air comprimé sortant du compresseur 12 alimente directement la chambre de combustion 24.

Selon l'invention, la turbomachine 11 est du type à cycle récupéré ce qui signifie que l'air comprimé sortant du compresseur 12 est chauffé avant d'être injecté dans la chambre de combustion 24.

Le chauffage de l'air comprimé est réalisé au moyen d'un échangeur de chaleur 38 d'une part et d'un ensemble de deux volutes 40a, 40b d'autres part. L'échangeur de chaleur 38 est schématiquement représenté et comprend pour l'essentiel deux circuits 38a, 38b, à savoir :
- un premier circuit 38a dont une entrée 38aa est raccordée à des moyens de prélèvement de gaz d'échappement en sortie des turbines 30 ou dans la tuyère d'échappement précitée, et une sortie 38ab qui peut également être reliée à la tuyère d'échappement en vue du relargage de ces gaz dans l'atmosphère, et
- un second circuit 38b comportant une entrée 38ba et une sortie 38bb reliées à l'ensemble de volutes 40a, 40b.

Les volutes 40a, 40b sont alignées sur l'axe A mais séparées et donc à distance axiale l'une de l'autre.

Chaque volute 40a ,40b comprend un conduit enroulé en spirale autour de l'axe A, comme évoqué dans ce qui précède en relation avec la figure 2.

Les volutes 40a, 40b ont chacune une section de passage de forme circulaire ou ovale, de préférence sur toute leur étendue circonférentielle. Par forme ovale, on entend toute forme elliptique ou ovoïde, ou encore oblongue. D'autres formes sont cependant envisageables. La section de passage du conduit évolue sur sa circonférence, de préférence de manière progressive. Chaque volute 40a, 40b comprend un premier port 9 situé à la périphérie externe du conduit et orienté en direction tangentielle, et un second port 10 situé à la périphérie interne du conduit et orienté en direction sensiblement radiale. Seuls les seconds ports 10 sont visibles à la figure 3.

La volute 40a a son second port 10 qui est raccordé à la sortie 34b du diffuseur 34 et son premier port 9 qui alimente l'entrée 38ba du second circuit 38b de l'échangeur 38. La sortie 38bb de ce second circuit 38b est reliée au premier port 9 de la seconde volute 40b dont le second port 10 est raccordé par une nouvelle conception du redresseur 42 à l'espace annulaire E dans laquelle est située la chambre 24.

Les ports 9 peuvent avoir chacun une forme générale tubulaire et sont accouplés respectivement à l'entrée 38ba et à la sortie 38bb de l'échangeur 38 par des moyens appropriés.

Dans l'exemple représenté, la volute 40a est située en amont de la volute 40b. La distance entre les volutes 40a, 40b permet de supprimer tout risque d'échanges thermiques entre les flux d'air circulant simultanément dans les deux volutes.

Par ailleurs, les volutes 40a ,40b s'étendent autour et à distance du carter 29 et sont fixées à ce dernier par bridage, comme cela sera détaillé dans ce qui suit.

Le conduit de chaque volute 40a, 40b comprend une peau annulaire qui définit la section de passage précitée et qui a une épaisseur sensiblement constante, à la fois sur son étendue circonférentielle autour de l'axe A mais aussi sur toute son étendue axiale lorsqu'on considère une section axiale du conduit, comme visible à la figure 3 par exemple.

La volute 40a est sensiblement située au droit de la sortie du compresseur 12 et du diffuseur 34. La volute 40a a un diamètre interne D1 inférieur au diamètre externe Dext du carter 29.

La volute 40a comprend plusieurs bossages 46 disposés de façon annulaire en saillie sur sa peau, qui comprennent des trous 48 borgnes et taraudés de vissage de vis 50.

Ces bossages 46 sont appliqués contre des brides annulaires 52 du carter 29 ou d'un autre carter externe de la turbomachine, ces brides 52 comportant des orifices de passage des vis 50.

Le second port 44 de la volute 40a comprend deux parois annulaires 60, 62 s'étendant autour de l'axe A et définissant entre elles une veine de passage d'air.

Les parois 60, 62 sont sensiblement parallèles et s'étendent en saillie radialement vers l'intérieur depuis la périphérie interne de la volute 40a. Dans l'exemple représenté, les parois 60, 62 sont radiales et s'étendent radialement vers l'intérieur.

Dans l'exemple représenté, la volute 40a est formée d'une seule pièce avec ces parois 60, 62.

Les parois 60, 62 de la volute 40a ont des extrémités libres opposées au conduit, qui définissent un connecteur 64 orienté sensiblement radialement de liaison à la sortie 34b du diffuseur 34. Ce connecteur 64 a une forme annulaire et peut être fixé par des vis ou analogues au carter 29 ou à un autre carter de la turbomachine.

Dans l'exemple représenté, les parois 60, 62 ont une épaisseur similaire ou identique à celle de la peau de la volute 40a.

Selon l'invention, le redresseur 42 et le second port 10 de la volute 40b sont intégrés dans une conduite annulaire 44 qui assure la liaison de la volute 40b au carter 29 de la chambre et qui s'étend au moins en partie en saillie à l'extérieur du carter. La volute 40b est située en aval de la chambre 24.

La conduite 44 comprend deux parois annulaires 70, 72 s'étendant autour de l'axe A et définissant entre elles une veine de passage d'air. Les parois 70, 72 sont sensiblement parallèles et s'étendent en saillie sur le carter avec au moins une composante axiale.

Dans le mode de réalisation de la figure 3, la conduite 44 s'étend essentiellement axialement. Dans le mode de réalisation de la figure 4, la conduite 44 est inclinée d'un angle α compris entre 0 et 90° par rapport à un plan P1 perpendiculaire à l'axe A, cet angle α étant mesuré dans un plan passant par cet axe. L'angle α est de préférence strictement supérieur à 0° et de préférence strictement inférieur à 90°.

Dans l'exemple représenté, les parois 70, 72 ont une épaisseur similaire ou identique à celle de la peau de la volute 40b.

La volute 40b est ici formée d'une seule pièce avec une partie du carter 29, cette partie du carter comprenant des brides annulaires 74 de fixation à d'autres brides 76 de la turbomachine.

Dans l'exemple représenté, la volute 40b est reliée à une bride amont 74a de fixation à une bride 52 et à un bossage 46 de fixation de la volute 40a. Les vis 50 précitées traversent des orifices des brides 45, 74a et sont vissées dans les trous borgnes 48 du bossage 46.

La volute 40b est en outre reliée à une bride aval 74b de fixation à des brides 76 d'un carter interne de la chambre 24 par exemple.

La volute 40b a un diamètre interne D2 supérieur au diamètre externe Dext du carter 29 dans le cas de la figure 4.

Le redresseur 42 comprend des aubages 78 qui s'étendent entre les parois 70, 72 et qui sont configurés pour que le flux d'air alimentant l'espace E ait une giration et un Mach prédéterminés. En pratique, les aubages 78 ont un profil aérodynamique et sont dimensionnés en fonction du débit et de la vitesse de l'air sortant de l'échangeur 38 pour conférer à l'air sortant du redresseur 42 un Mach (ou une vitesse) et une giration (profil de vitesse autour de l'axe A) qui sont spécifiquement adaptés à la chambre 24 et en particulier à son type, sa forme et ses dimensions. Ceci permet de limiter les pertes de charge dans l'espace E et optimise l'alimentation en air de la chambre 24 et donc les performances de la turbomachine. Les aubages 78 peuvent avoir une dimension longitudinale, le long d'un axe d'allongement de la conduite 44, qui représente au moins 80% de la longueur de cette conduite.

## Revendications

1. Turbomachine (11) d'aéronef, comportant :
- un compresseur centrifuge (12) s'étendant autour d'un axe A,
- une chambre annulaire de combustion (24) s'étendant autour de l'axe A
- un carter annulaire (29) s'étendant autour de l'axe A et de la chambre et délimitant un espace annulaire (E) dans laquelle est située la chambre, et
- un échangeur de chaleur (38), cet échangeur comportant :
- un premier circuit (38a) alimenté en gaz d'échappement de la turbomachine, et
- un second circuit (38b) comportant une entrée (38ba) reliée par une première volute (40a) à une sortie (34b) du compresseur (12), et une sortie (38bb) reliée par une seconde volute (40b) audit espace (E),
**caractérisée en ce que** les volutes (40a, 40b) sont à distance axiale l'une de l'autre, et **en ce que** la seconde volute (40b) est reliée à l'espace (E) par un redresseur (42) qui est situé au moins en partie à l'extérieur du carter (29) et qui est intégré dans une conduite annulaire (44) de liaison de la seconde volute (40b) à ce carter (29).

2. Turbomachine (11) selon la revendication 1, dans laquelle les volutes (40a, 40b) ont chacune une section de passage de forme circulaire ou ovale.

3. Turbomachine (11) selon la revendication 1 ou 2, dans laquelle le redresseur (42) et la seconde volute (40b), voire également au moins une partie dudit carter (29), sont formés d'une seule pièce.

4. Turbomachine (11) selon l'une des revendications précédentes, dans laquelle ledit redresseur (42) comprend des aubages (78) qui sont configurés pour que le flux d'air alimentant ledit espace (E) ait une giration et un Mach prédéterminés.

5. Turbomachine (11) selon la revendication précédente, dans laquelle ledit redresseur (42) comprend deux parois annulaires (70, 72) coaxiales et s'étendant parallèlement l'une par rapport à l'autre, ces parois étant reliées entre elles par lesdits aubages (78) qui comportent chacun un profil aérodynamique

6. Turbomachine (11) selon l'une des revendications précédentes, dans laquelle la chambre de combustion (24) est du type inversé et comprend un fond de chambre (28) à son extrémité aval, la seconde volute (40b) étant située en aval d'un plan (P1) perpendiculaire à l'axe (A) et passant par le fond de chambre.

7. Turbomachine (11) selon l'une des revendications précédentes, dans laquelle le redresseur (42) est incliné d'un angle α compris entre 0 et 90° par rapport à un plan (P1) perpendiculaire à l'axe (A), cet angle étant mesuré dans un plan passant par cet axe.

8. Turbomachine (11) selon l'une des revendications précédentes, dans laquelle la seconde volute (40b) a un diamètre interne (D2) supérieur ou égal au diamètre externe (Dext) dudit carter (29).

9. Turbomachine (11) selon l'une des revendications précédentes, dans laquelle la première volute (40a) a un diamètre interne (D1) inférieur au diamètre externe (Dext) du carter (29).

10. Turbomachine (11) selon l'une des revendications précédentes, dans laquelle les premières et secondes volutes (40a, 40b) comprennent des bossages (46) à trous (48) taraudés et/ou des brides de fixation (74), qui sont formés d'une seule pièce avec le reste de ces volutes.

## Patentansprüche

1. Turbotriebwerk (11) eines Luftfahrzeugs, umfassend:
- einen Zentrifugalkompressor (12), der sich um eine Achse A erstreckt,
eine ringförmige Brennkammer (24), die sich um die Achse A erstreckt,
- ein ringförmiges Gehäuse (29), das sich um die Achse A und die Kammer erstreckt und einen ringförmigen Raum (E) begrenzt, in welchem sich die Kammer befindet, und
- einen Wärmetauscher (38), wobei dieser Tauscher umfasst:
- einen ersten Kreislauf (38a), der mit Abgas aus dem Turbotriebwerk gespeist wird, und
- einen zweiten Kreislauf (38b), der einen Eingang (38ba), der durch eine erste Spirale (40a) mit einem Ausgang (34b) des Kompressors (12) verbunden ist, und einen Ausgang (38bb), der durch eine zweite Spirale (40b) mit dem Raum (E) verbunden ist, umfasst,
**dadurch gekennzeichnet, dass** die Spiralen (40a, 40b) axial voneinander beabstandet sind und dass die zweite Spirale (40b) mit dem Raum (E) durch einen Gleichrichter (42) verbunden ist, der sich mindestens teilweise außerhalb des Gehäuses (29) befindet und der in eine ringförmige Leitung (44) zur Verbindung der zweiten Spirale (40b) mit diesem Gehäuse (29) integriert ist.

2. Turbotriebwerk (11) nach Anspruch 1, wobei die Spiralen (40a, 40b) jeweils einen kreisförmigen oder ovalen Durchgangsquerschnitt aufweisen.

3. Turbotriebwerk (11) nach Anspruch 1 oder 2, wobei der Gleichrichter (42) und die zweite Spirale (40b) oder auch mindestens ein Teil des Gehäuses (29) aus einem Stück gebildet sind.

4. Turbotriebwerk (11) nach einem der vorstehenden Ansprüche, wobei der Gleichrichter (42) Schaufeln (78) umfasst, die konfiguriert sind, damit der Luftstrom, der den Raum (E) versorgt, eine vorbestimmte Kreisdrehung und einen vorbestimmten Mach aufweist.

5. Turbotriebwerk (11) nach dem vorstehenden Anspruch, wobei der Gleichrichter (42) zwei ringförmige Wände (70, 72) umfasst, die koaxial sind und sich parallel zueinander erstrecken, wobei diese Wände durch die Schaufeln (78) miteinander verbunden sind, die jeweils ein aerodynamisches Profil aufweisen.

6. Turbotriebwerk (11) nach einem der vorstehenden Ansprüche, wobei die Brennkammer (24) vom umgekehrten Typ ist und einen Kammerboden (28) an ihrem stromabwärtigen Ende umfasst, wobei sich die zweite Spirale (40b) stromabwärts einer Ebene (P1) befindet, die senkrecht zur Achse (A) und durch den Kammerboden verläuft.

7. Turbotriebwerk (11) nach einem der vorstehenden Ansprüche, wobei der Gleichrichter (42) um einen Winkel α zwischen 0 und 90° in Bezug auf eine Ebene (P1) senkrecht zur Achse (A) geneigt ist, wobei dieser Winkel in einer Ebene gemessen wird, die durch diese Achse verläuft.

8. Turbotriebwerk (11) nach einem der vorstehenden Ansprüche, wobei die zweite Spirale (40b) einen Innendurchmesser (D2) aufweist, der größer oder gleich dem Außendurchmesser (Dext) des Gehäuses (29) ist.

9. Turbotriebwerk (11) nach einem der vorstehenden Ansprüche, wobei die erste Spirale (40a) einen Innendurchmesser (D1) aufweist, der kleiner ist als der Außendurchmesser (Dext) des Gehäuses (29).

10. Turbotriebwerk (11) nach einem der vorstehenden Ansprüche, wobei die erste und die zweite Spirale (40a, 40b) Erhebungen (46) mit Gewindebohrungen (48) und/oder Befestigungsflanschen (74) umfassen, die aus einem Stück mit dem Rest dieser Spiralen gebildet sind.

## Claims

1. An aircraft turbomachine (11), comprising:
- a centrifugal compressor (12) extending around an axis A,
- an annular combustion chamber (24) extending around the axis A
- an annular casing (29) extending around the axis A and the chamber and delimiting an annular space (E) in which the chamber is located, and
- a heat exchanger (38), this exchanger comprising:
- a first circuit (38a) supplied with exhaust gases from the turbomachine, and
- a second circuit (38b) comprising an inlet (38ba) connected by a first volute (40a) to an outlet (34b) of the compressor (12), and an outlet (38bb) connected by a second volute (40b) to said space (E),
**characterized in that** the volutes (40a, 40b) are at an axial distance from one another, and **in that** the second volute (40b) is connected to the space (E) by a rectifier (42) which is located at least in part outside the casing (29) and which is integrated into an annular connecting pipe (44) which connects the second volute (40b) to this casing (29).

2. The turbomachine (11) according to claim 1, wherein the volutes (40a, 40b) each have a circular or oval shaped flow section.

3. The turbomachine (11) according to claim 1 or 2, wherein the rectifier (42) and the second volute (40b), or even at least a part of said casing (29), are formed in one piece.

4. The turbomachine (11) according to one of the preceding claims, wherein said rectifier (42) comprises blades (78) that are configured so that the airflow supplying said space (E) has a predetermined gyration and Mach.

5. The turbomachine (11) according to the preceding claim, wherein said rectifier (42) comprises two annular walls (70, 72) which are coaxial and extend parallel to each other, these walls being connected to each other by said blades (78) which each comprise an aerodynamic profile.

6. The turbomachine (11) according to one of the preceding claims, wherein the combustion chamber (24) is of the inverted type and comprises a chamber bottom (28) at its downstream end, the second volute (40b) being situated downstream of a plane (P1) perpendicular to the axis (A) and passing through the chamber bottom.

7. The turbomachine (11) according to one of the preceding claims, wherein the rectifier (42) is inclined at an angle α of between 0 and 90° with respect to a plane (P1) perpendicular to the axis (A), this angle being measured in a plane passing through this axis.

8. The turbomachine (11) according to one of the preceding claims, wherein the second volute (40b) has an inner diameter (D2) greater than or equal to the external diameter (Dext) of said casing (29).

9. The turbomachine (11) according to one of the preceding claims, wherein the first volute (40a) has an inner diameter (D1) smaller than the outer diameter (Dext) of the casing (29).

10. The turbomachine (11) according to one of the preceding claims, wherein the first and second volutes (40a, 40b) comprise bosses (46) with threaded holes (48) and/or attachment flanges (74), which are formed in one piece with the rest of these volutes.
